# FASCICULE DE BREVET EUROPEEN

(11) **EP 2 656 509 B1**
(45) Date de publication et mention de la délivrance du brevet: **18.02.2015**
(21) Numéro de dépôt: 11817372.3
(22) Date de dépôt: 16.12.2011
(51) Int. Cl.: H04B 1/7163, G08B 25/00, G08B 25/10, H04B 1/69, H04L 29/08

(54) **PROTECTION CONTRE LA DETECTION DE SIGNAUX D'ALERTE**
SCHUTZ GEGEN DAS DETEKTIEREN VON ALERTSIGNALEN
PROTECTION AGAINST THE DETECTION OF ALERT SIGNALS

(30) Priorité: 21.12.2010 FR 1060961
(43) Date de publication de la demande: 30.10.2013
(73) Titulaire: Orange, 75015 Paris (FR)
(72) Inventeur: KOUNTOURIS, Apostolos, F-38000 Grenoble (FR); MISCOPEIN, Benoît, F-38000 Grenoble (FR)
(74) Mandataire: Cabinet Plasseraud
(86) Numéro de dépôt international: PCT/FR2011/053027
(87) Numéro de publication internationale: WO 2012/085413

(56) Documents cités:
- WO-A1-2006/022802
- YEONG-HYUN KWON ET AL: "The Security Monitoring System Using IEEE 802.15.4 Protocol and CMOS Image Sensor", NEW TRENDS IN INFORMATION AND SERVICE SCIENCE, 2009. NISS '09. INTERNATIONAL CONFERENCE ON, IEEE, PISCATAWAY, NJ, USA, 30 juin 2009 (2009-06-30), pages 1197-1202, XP031530856, ISBN: 978-0-7695-3687-3
- YONG TAE PARK ET AL: "Smart digital door lock for the home automation", TENCON 2009 - 2009 IEEE REGION 10 CONFERENCE, IEEE, PISCATAWAY, NJ, USA, 23 janvier 2009 (2009-01-23), pages 1-6, XP031617499, ISBN: 978-1-4244-4546-2

## Description

La présente invention concerne la protection de la transmission de messages d'alerte entre des capteurs et un collecteur formant un réseau.

Elle concerne plus précisément des applications de détection des événements pour une communication M2M (pour « Machine to Machine » en anglais) dans un réseau M2M comprenant des capteurs et au moins un collecteur résultant de l'occurrence d'un évènement détecté par un capteur du réseau. Dans un réseau M2M, un évènement est lié à l'observation de données d'un ou plusieurs types. Quand une condition relative à au moins une de ces données observées est satisfaite, un évènement est généré et une signalisation de cet évènement est transmise au collecteur. La détection de l'événement peut être relative à une alerte dans le cadre d'une application de sécurité. L'évènement peut survenir consécutivement au passage d'une mesure du capteur au-dessous ou au-dessus d'une valeur seuil par exemple. L'instant où la signalisation de l'événement est envoyée peut être défini au moyen d'un timer et d'une valeur prédéfinie. Ainsi, lorsque le timer atteint la valeur prédéfinie, l'envoi de la signalisation est déclenché.

La signalisation d'un évènement peut donc être périodique, comme dans le cas d'une périodicité de prise de mesures d'un capteur, ou asynchrone lorsqu'elle est transmise consécutivement à l'occurrence d'un évènement détecté, comme le passage d'une mesure du capteur au-dessous ou au-dessus d'une valeur seuil, tel que précédemment évoqué.

De telles communications entre des capteurs et un collecteur possèdent généralement des contraintes de sûreté de fonctionnement et de sécurité d'une information transportée. En effet, en raison de la nature de la communication, sous forme de radio fréquences, tout message émis par une des entités, capteur ou collecteur, peut être intercepté par une tierce partie malveillante.

Actuellement, des méthodes cryptographiques permettent de sécuriser des informations contenues dans des messages échangés. Elles proposent par exemple l'emploi de dispositifs de chiffrement/déchiffrement sur la base d'au moins une clé secrète.

Cependant, dans le cas de systèmes de détection de présence à l'intérieur de locaux par exemple, le simple fait d'envoyer un message, consécutivement à la détection d'un évènement, constitue déjà une information

Par exemple, un système de détection de présence mis en place dans l'habitation d'un utilisateur peut comporter un ensemble de capteurs répartis dans un ensemble de pièces de l'habitation, les capteurs étant adaptés pour communiquer avec un collecteur. Ainsi, lorsque l'un des capteurs détecte une présence dans une pièce, il peut émettre un message chiffré à destination du collecteur. Une tierce partie malveillante située à l'extérieur de l'habitation peut, au moyen d'un dispositif d'écoute radio, détecter l'émission du message et en déduire l'occurrence d'une détection par un capteur à l'intérieur de la maison. Cette connaissance peut être ensuite utilisée par elle pour commettre des actes malveillants. En effet, sur détection d'une présence et interception de la signalisation, la tierce partie malveillante peut décider ou non de commettre un acte malveillant. Par conséquent, la sécurité et la confidentialité du système risque d'être compromise.

Le système de détection ne rend donc pas les communications entre ses éléments transparentes à une tierce partie malveillante.

Une solution pour rendre transparente la détection d'un évènement par un réseau de capteurs consisterait à rendre les communications strictement périodiques et à envoyer à chaque période un message chiffré contenant soit une information relative à la détection d'un évènement soit une information relative à aucune détection.

Cependant, pour obtenir une réactivité proche de celle des systèmes de détection asynchrones cadencés par l'occurrence d'évènements, les systèmes de détection d'évènements par envoi de messages périodiques doivent posséder des périodes courtes, ce qui génère une consommation énergétique importante. Par ailleurs, ces systèmes sont facilement interceptés et brouillés. Enfin, la gestion de l'envoi périodique de messages en parallèle de la détection ponctuelle d'un évènement est complexe.

Une autre solution consiste à utiliser une émission de messages à ultra large bande UWB (pour « Ultra Wide Band » en anglais) qui consiste en une faible émission d'énergie dans un spectre large de fréquences. Ainsi, le message envoyé est dissimulé au-dessous d'un seuil de bruit mais peut être capté par un récepteur lorsque ce dernier est synchronisé avec un émetteur de ces messages. Un mode de transmission UWB, appelé TH-UWB (pour « Time-Hopping Ultra Wide Band ») consiste en l'émission de signaux à bande ultra large, de l'ordre du GigaHertz (GHz), et de très courte durée, de l'ordre de la nanoseconde, de manière irrégulière, les instants d'émission étant déterminés par un code d'étalement, tel qu'un code de saut temporel par exemple. Les émissions d'impulsions sont donc décalées les unes par rapport aux autres, les décalages étant prévus par le code de saut temporel. Ce code de saut étant partagé par l'émetteur et le récepteur, le récepteur peut ouvrir des fenêtres de démodulation aux instants d'arrivée des impulsions. En variante, il est possible de détecter les impulsions, de mesurer des écarts temporels entre les impulsions reçues et de comparer ces écarts avec le code de saut pour retrouver la séquence émise.

Cependant, des techniques telles que celle dite du « dirty template » permettent à une tierce partie de retrouver une signature temporelle récurrente dans un signal émis et ainsi de retrouver une forme de synchronisation, sans avoir la connaissance du code de saut utilisé. La sécurité inhérente aux systèmes de détection par transmission radio fréquences ne permet donc pas d'empêcher l'interception d'informations par une tierce partie.

Les documents "The Security Monitoring System Using IEEE 802.15.4 Protocol and CMOS Image Sensor", NEW TRENDS IN INFORMATION AND SERVICE SCIENCE, 2009. NISS'09. INTERNATIONAL CONFERENCE ON, IEEE, PISCATAWAY, NJ, USA, 30 juin 2009 (2009-06-30), pages 1197-1202, par YEONG-HYUN KWON ET AL; "Smart digital door lock for the home automation",TENCON 2009 - 2009 IEEE REGION 10 CONFERENCE, IEEE, PISCATAWAY, NJ, USA, 23 janvier 2009 (2009-01-23), pages 1-6, par YONG TAE PARK ET AL décrivent, comme indiqué dans le préambule des revendications de méthode indépendantes 1 et 9 de la présente demande, un procédé de communication entre au moins un capteur détecteur d'évènement et un collecteur de données de détection d'évènement transmises par le capteur sous la forme d'un message de signalisation d'évènement dont la modulation est définie par au moins un code d'étalement. Ces systèmes utilisent une technologie à étalement de spectre, mais pas la transmission de germes de séquences. La demande internationale numéro WO 2006/022802 A1 décrit l'utilisation de germes pour construires des séquences pseudo-aléatoires pour systèmes ZigBee.

La présente invention vient améliorer la situation.

Elle propose à cet effet un procédé de communication entre au moins un capteur détecteur d'évènement et un collecteur de données de détection d'évènement transmises par le capteur sous la forme d'un message de signalisation d'évènement dont la modulation est définie par au moins un code d'étalement, le procédé comprenant les étapes mises en oeuvre par le capteur:
- sur détection d'un évènement, génération de données de détection d'évènement ;
- réception d'un message de synchronisation émis par le collecteur, le message de synchronisation comprenant un germe pour une génération pseudo-aléatoire d'au moins un code d'étalement ;
- génération pseudo-aléatoire d'au moins un code d'étalement à partir du germe ;
- émission d'un message de signalisation d'évènement dont la modulation est définie par le au moins un code d'étalement généré aléatoirement, le message de signalisation d'évènement comprenant les données de détection d'évènement.

L'invention permet avantageusement de partager un mode d'émission défini par un code d'étalement, sans communiquer au préalable le code d'étalement utilisé. En effet, le collecteur communique uniquement un germe au capteur indépendamment de la détection de l'évènement. Cette transmission peut être effectuée à titre d'exemple de façon périodique ou consécutivement à une décision quelconque du collecteur. Le message de détection d'évènement est transmis par le capteur avec une modulation définie par le code d'étalement. La génération du code d'étalement étant pseudo-aléatoire, le collecteur peut, de son côté, générer le même code d'étalement à partir du germe et ainsi configurer une interface de réception des messages dont la modulation est définie par le code d'étalement. La génération pseudo-aléatoire du code d'étalement est donc confidentielle entre le capteur et le collecteur et n'est par conséquent pas connue d'une tierce partie. Ainsi, une tierce partie malveillante peut éventuellement intercepter le germe transmis dans le message de synchronisation, mais, du fait que le procédé de génération du code d'étalement selon l'invention n'est connu que du capteur et du collecteur, la tierce partie ne peut pas, à partir de ce germe, générer le code d'étalement partagé par le collecteur et l'émetteur, ce qui rend l'interception du message de signalisation d'évènement impossible pour cette tierce partie. Selon l'invention, un code d'étalement peut avantageusement être généré tous les n symboles, n entier supérieur ou égal à un, d'un message de signalisation, à partir d'un même germe ou d'un germe différent.

En tout état de cause, un même code d'étalement n'est pas utilisé pour plus d'un message de signalisation d'évènement. Ainsi, une tentative d'interception par « dirty template » ne pourra pas aboutir. En effet, cette technique d'interception utilise des enseignements acquis à partir de messages précédemment envoyés selon un même code d'étalement.

Dans le cadre de l'invention, la détection de l'événement et la réception du message de synchronisation sont décorrélées. Le capteur peut donc être par défaut dans un mode de réception désactivé et passer dans un mode de réception activé sur détection d'un évènement. Il économise donc de l'énergie. En effet, la désactivation du mode de réception permet de mettre en veille plusieurs fonctionnalités du capteur, qui consomment donc moins d'énergie. L'utilisation de l'énergie est donc optimisée pour le capteur.

Dans une réalisation de l'invention, le message de synchronisation est émis cycliquement, le germe qu'il comprend étant spécifique au cycle d'émission du message de synchronisation, le capteur détecte l'événement lors d'un cycle donné et traite le message de synchronisation du cycle qui suit le cycle donné.

Ce mode de réalisation permet avantageusement au capteur de recevoir, dans un délai dépendant de la durée du cycle, un message de synchronisation dont le germe est renouvelé à chaque cycle. Ainsi, le code d'étalement généré à partir du germe est modifié cycliquement ce qui améliore la sécurité associée aux échanges entre le collecteur et le capteur. De plus, la durée d'un cycle peut être réduite de manière à ce que le capteur puisse transmettre rapidement un message de signalisation d'évènement après la détection d'un évènement. En effet, aucune contrainte énergétique n'est associée au collecteur qui peut être connecté au secteur pour alimentation. La périodicité est donc uniquement imposée au collecteur et non pas aux capteurs qui réagissent à une détection ponctuelle d'évènement.

Ainsi, à chaque détection d'évènement, l'invention permet d'obtenir un nouveau germe pour la génération d'un code d'étalement définissant la modulation d'un message de signalisation d'évènement. Par conséquent, la technique de « dirty template » ne peut pas retrouver de signature récurrente et la sécurité associée à l'envoi d'un message de détection d'évènement est donc accrue.

En variante, on peut également prévoir que le germe soit spécifique à un ensemble de plusieurs cycles. Dans le cas où la détection d'un évènement ponctuel est relativement rare et où les messages de synchronisation sont envoyés régulièrement, cette réalisation permet d'éviter un renouvellement trop fréquent du germe transmis et donc d'éviter des générations aléatoires de germes par le collecteur potentiellement inutiles compte tenu de la rareté des détections d'évènement

Selon un autre aspect de l'invention, seule une partie du germe est spécifique à chaque cycle, l'autre partie du germe étant prédéfinie entre le capteur et le collecteur.

Ainsi, même dans le cas où une tierce partie malveillante parviendrait à connaître la manière dont le code d'étalement est généré pseudo-aléatoirement, elle ne pourrait pas avoir accès à l'autre partie du germe qui est partagée uniquement par le capteur et le collecteur et qui est confidentielle. Ainsi, le code d'étalement généré à partir du germe complet sera connu uniquement par le capteur et le collecteur ce qui améliore la sécurité associée aux échanges entre le capteur et le collecteur, même dans le cas où la tierce partie malveillante connaît un algorithme de génération pseudo-aléatoire de codes d'étalement.

Dans un mode de réalisation de l'invention, le code d'étalement est un code de saut et le message de signalisation est émis sous la forme d'un signal ultra large bande par saut temporel défini par le code de saut.

L'utilisation d'un code de saut temporel pour l'émission de signaux à ultra large bande consiste en l'émission de signaux à bande ultra large, de l'ordre du GigaHertz (GHz), et de très courte durée, de l'ordre de la nanoseconde, de manière irrégulière, les instants d'émission étant déterminés par le code de saut. Les émissions d'impulsions sont donc décalées les unes par rapport aux autres, les décalages étant prévus par le code de saut temporel. Ce code de saut étant partagé par le collecteur et le capteur, l'entité recevant un message peut ouvrir des fenêtres de démodulation aux instants d'arrivée des impulsions. Par ailleurs, l'émission de tels signaux de faible énergie répartie sur une bande de fréquence très large engendre une faible consommation d'énergie et les signaux peuvent être dissimulés au-dessous d'un seuil de bruit. L'utilisation de signaux ultra large bande permet avantageusement une économie considérable d'énergie pour le capteur et permet de dissimuler le message de signalisation d'évènement au-dessous d'un seuil de bruit, améliorant ainsi la sécurité associée aux échanges entre le capteur et le collecteur.

Selon une réalisation de l'invention, une période correspondant à un cycle d'émission de message de synchronisation par le collecteur étant divisée en une pluralité de créneaux temporels, le message du collecteur est reçu par le capteur lors du premier créneau temporel de chaque cycle et le message de signalisation est émis lors d'un créneau temporel suivant.

Cette réalisation permet de définir des créneaux temporels durant lesquels les différents messages sont échangés entre le collecteur et le capteur. Ainsi, il est concevable de réserver des créneaux pour des communications du collecteur vers le capteur et d'autres créneaux pour des communications du capteur vers le collecteur. Le collecteur et le capteur peuvent donc configurer leurs interfaces radio pour la réception ou pour l'émission de messages en fonction du créneau temporel dans lequel ils se trouvent. Par ailleurs, plusieurs capteurs peuvent ainsi communiquer un message de détection d'événement lors d'un même cycle mais durant des créneaux différents, ce qui permet d'éviter une collision entre les messages de détection d'évènement lors de leurs réceptions par le collecteur.

Dans un mode de réalisation de l'invention, une pluralité de codes d'étalement est générée, la pluralité étant divisée en séquences de codes d'étalement, chaque séquence de codes d'étalement étant associée à un créneau temporel à partir du deuxième créneau temporel et chaque message émis dans un créneau temporel est émis avec une modulation définie par la séquence de codes d'étalement associée au créneau temporel.

Ce mode de réalisation permet avantageusement d'utiliser une pluralité de codes de saut pour un même cycle ce qui améliore la sécurité associée aux échanges entre le capteur et le collecteur. Ainsi, en considérant qu'un message de signalisation d'évènement est constitué de plusieurs symboles à transmettre, chaque symbole peut être transmis avec une modulation différente, définie par l'un des codes d'étalement de la séquence de codes d'étalement.

Dans une réalisation de l'invention, le message de signalisation d'évènement comprend un préambule de synchronisation pour la synchronisation du capteur et du collecteur, le préambule de synchronisation étant émis avec une modulation définie par un unique code d'étalement.

Cette réalisation permet avantageusement d'accélérer une synchronisation entre le collecteur et le capteur et d'ainsi faciliter la réception de l'autre partie du message, comprenant notamment les données de détection d'évènement. Le code d'étalement utilisé peut être fixe et prédéterminé entre le capteur et le collecteur, afin de synchroniser rapidement le collecteur et le capteur. Le code d'étalement utilisé pour la modulation du préambule de synchronisation peut aussi être généré à partir du germe du message de synchronisation, ce qui permet une synchronisation temporelle facile et rapide du collecteur et du capteur, car un seul code d'étalement est utilisé pour le préambule de synchronisation, et une amélioration de la sécurité de l'échange en modifiant le code d'étalement utilisé sur réception d'un germe dans un message de synchronisation.

L'invention porte aussi sur un programme d'ordinateur comportant des instructions pour la mise en oeuvre du procédé de communication qui vient d'être décrit, lorsque ce programme est exécuté par un processeur.

L'invention concerne aussi un procédé de communication entre au moins un capteur détecteur d'évènement et un collecteur de données de détection d'évènement transmises par le capteur sous la forme d'un message de signalisation d'évènement dont la modulation est définie par au moins un code d'étalement, le procédé comportant les étapes mises en oeuvre par le collecteur:
- émission d'un message de synchronisation, le message de synchronisation comprenant un germe pour une génération pseudo-aléatoire d'au moins un code d'étalement ;
- génération pseudo-aléatoire d'au moins un code d'étalement à partir du germe ; et
- réception d'un message de signalisation d'évènement dont la modulation est définie par le au moins un code d'étalement, le message de signalisation d'évènement comprenant des données de détection d'évènement.

Le procédé de communication dont les étapes sont mises en oeuvre par le collecteur pourra bien sûr comporter tout ou partie des différentes caractéristiques relatives au procédé de communication selon l'invention, dont les étapes sont mises en oeuvre par le capteur. Ainsi, ces caractéristiques et leurs avantages associés sont les mêmes que ceux du procédé de communication précédent, et ne sont pas détaillés plus amplement.

L'invention porte aussi sur un programme d'ordinateur comportant des instructions pour la mise en oeuvre du procédé de communication qui vient d'être décrit, lorsque ce programme est exécuté par un processeur.

L'invention concerne en outre un système de communication comprenant au moins un capteur détecteur d'évènement et un collecteur de données de détection d'évènement transmises par le capteur sous la forme d'un message de signalisation d'évènement dont la modulation est définie par au moins un code d'étalement, le collecteur comprenant des moyens pour :
- l'émission d'un message de synchronisation comprenant un germe ;
- la réception d'un message de signalisation comprenant des données de détection dudit capteur;
et le capteur comprenant des moyens pour :
- détecter un évènement ;
- générer des données de détection d'évènement ;
- recevoir un message de synchronisation du collecteur, le message de synchronisation comprenant un germe pour une génération pseudo-aléatoire d'au moins un code d'étalement ;
- générer pseudo-aléatoirement au moins un code d'étalement à partir du germe; et
- émettre un message de signalisation d'évènement dont la modulation est définie par le au moins un code d'étalement, le message de signalisation comprenant les données de détection d'évènement.

Dans une réalisation, le système comprend en outre un brouilleur adapté pour émettre des signaux dont la modulation est définie par un code d'étalement aléatoire. L'utilisation d'un brouilleur permet de fournir des informations ne correspondant pas à la détection d'un évènement à une tierce partie malveillante et ainsi de compliquer l'accès aux échanges entre le capteur et le collecteur.

L'invention porte aussi sur un collecteur de données de détection d'évènement comprenant des moyens pour :
- émettre un message de synchronisation, le message de synchronisation comprenant un germe pour une génération pseudo-aléatoire d'au moins un code d'étalement ;
- générer pseudo-aléatoirement au moins un code d'étalement à partir du germe; et
- recevoir un message de signalisation d'évènement dont la modulation est définie par le au moins un code d'étalement, le message de signalisation comprenant des données de détection d'évènement.

L'invention concerne en outre un capteur détecteur d'évènement comprenant des moyens pour:
- détecter un évènement ;
- générer des données de détection d'évènement ;
- recevoir un message de synchronisation, le message de synchronisation comprenant un germe pour une génération pseudo-aléatoire d'au moins un code d'étalement ;
- générer pseudo-aléatoirement au moins un code d'étalement à partir du germe; et
- émettre un message de signalisation d'évènement dont la modulation est définie par le au moins un code d'étalement, le message de signalisation comprenant les données de détection d'évènement.

D'autres caractéristiques et avantages de l'invention apparaîtront à l'examen de la description détaillée ci-après, et des dessins annexés sur lesquels:
- la figure 1 illustre une architecture générale d'un système de détection selon un mode de réalisation de l'invention ;
- la figure 2 illustre un exemple de réalisation d'un procédé de communication entre un capteur détecteur d'évènement et un collecteur, selon un mode de réalisation de l'invention ;
- la figure 3.a illustre une structure d'un message de synchronisation selon l'invention ;

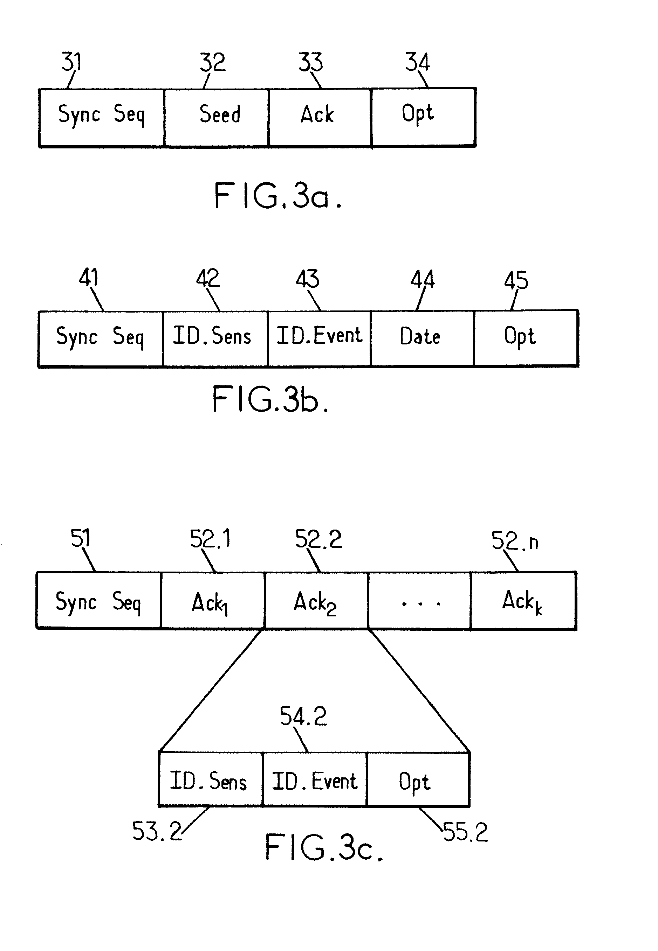

- la figure 3.b illustre une structure d'un message de signalisation d'évènement selon l'invention ;
- la figure 3.c illustre une structure d'un message d'acquittement selon l'invention ;

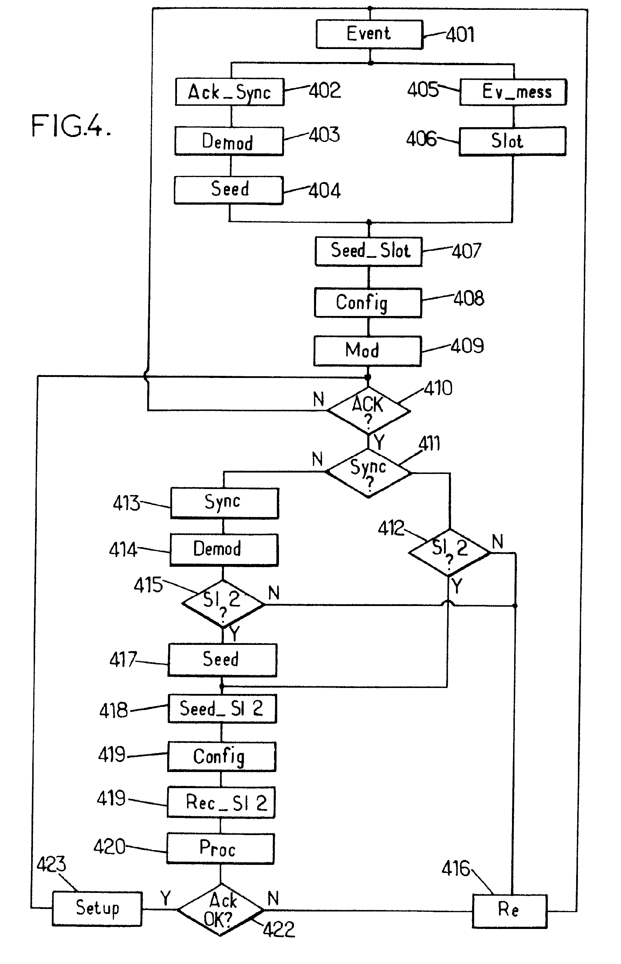

- la figure 4 illustre un organigramme représentant les étapes mises en oeuvre par un capteur pour l'émission ou la réémission d'un message de détection d'évènement selon l'invention ;

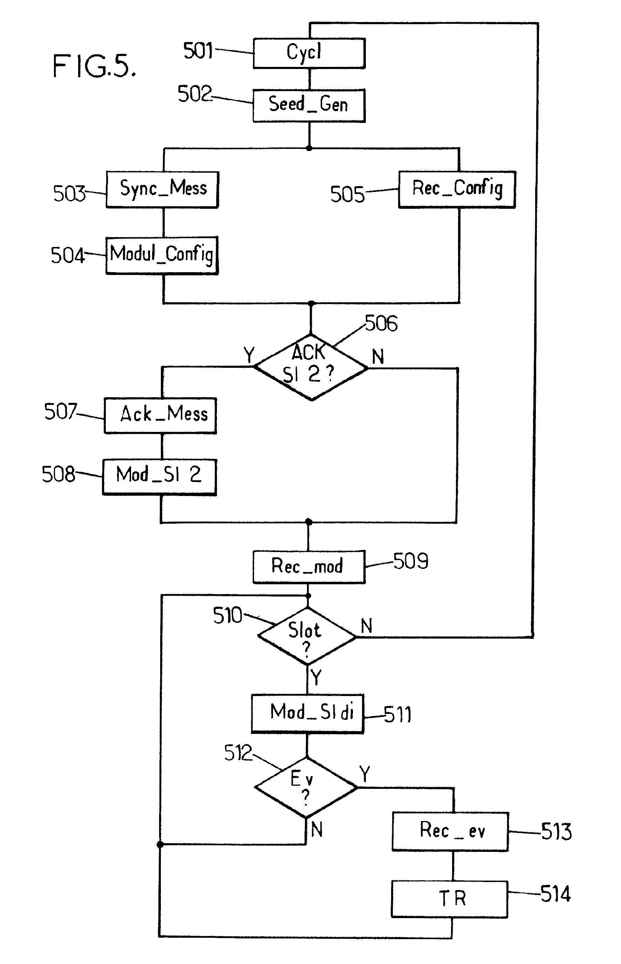

- la figure 5 illustre un organigramme représentant les étapes mises en oeuvre par un collecteur pour l'émission de messages de synchronisation et d'acquittement selon l'invention ;

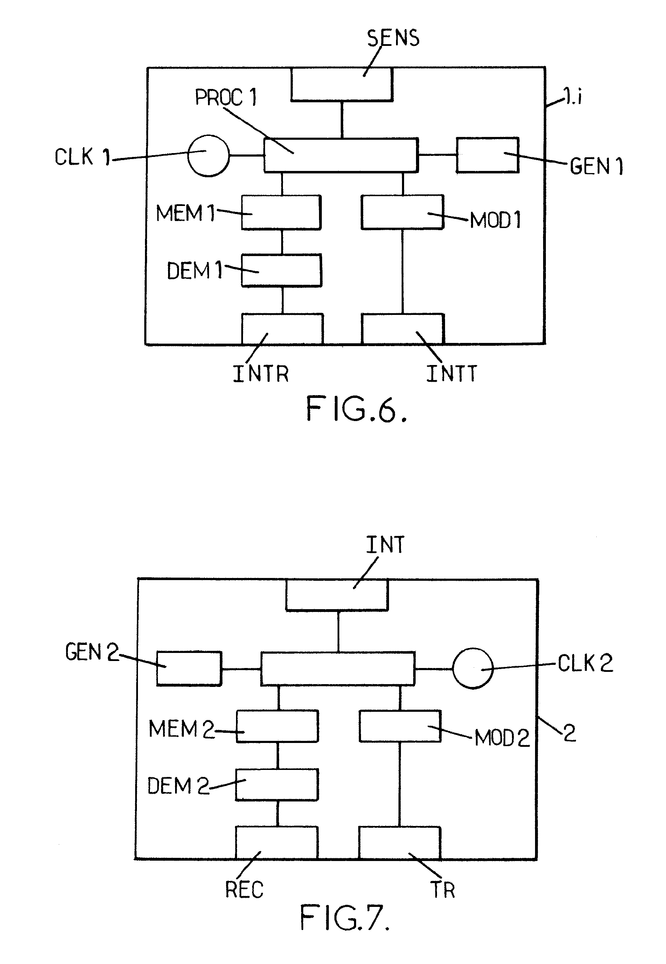

- la figure 6 représente structurellement un capteur selon un mode de réalisation de l'invention ;
- la figure 7 représente structurellement un collecteur selon un mode de réalisation de l'invention.

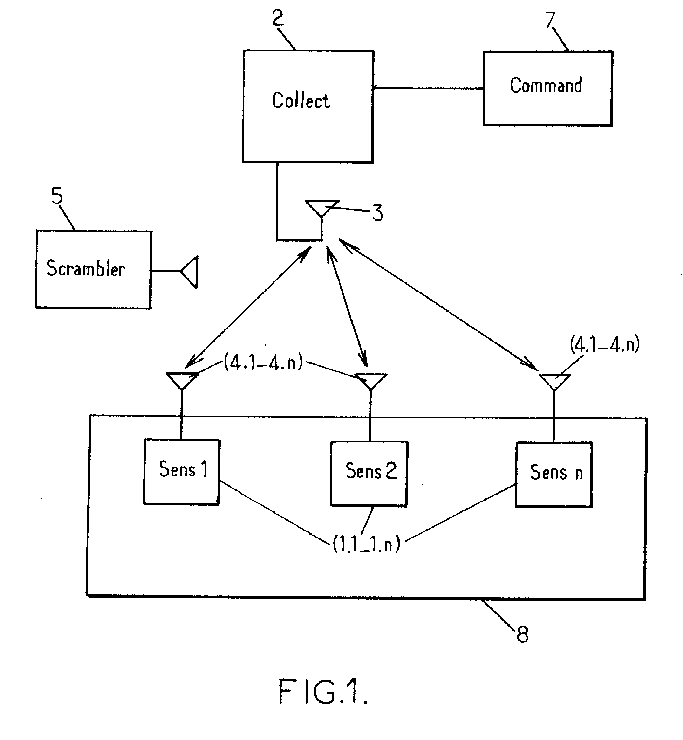

La figure 1 illustre une architecture générale d'un système de détection selon un mode de réalisation de l'invention.

Dans ce mode de réalisation, on considère un mode de communication bidirectionnel de type ultra large bande impulsionnel. Dans ce mode de réalisation, le code d'étalement est un code de saut temporel et la modulation d'un message consiste en un agencement temporel de symboles du message défini par le code de saut ou par une séquence de codes de saut.

Toutefois, l'invention n'est pas limitée à ce mode de communication. Elle pourrait notamment s'appliquer à tout mode de communication utilisant un code d'étalement pour la modulation des symboles contenu dans un message à transmettre entre un émetteur et un récepteur de manière confidentielle. On se référera par exemple à l'article de Pickholtz, R. L., Schilling, D. L., and Milstein, L. B. intitulé "Theory of Spread-Spectrum Communications-A Tutorial" publié dans la revue IEEE Trans. Commun., vol. COM30, no. 5, en mai 1982, pp 855-884. La référence citée donne des exemples de systèmes utilisant une modulation fréquentielle définie par un code d'étalement.

Le système comprend un collecteur 2 ainsi qu'un réseau de n capteurs 1.1-1.n. Un mode de communication bidirectionnel de type ultra large bande impulsionnel à code de saut temporel peut être mis en place au moyen d'interfaces sans fil 4.1-4.n des capteurs 1.1-1.n et d'une interface sans fil 3, du collecteur 2. Les interfaces sans fil 4.1-4.n et 3 sont considérées par la suite comme des interfaces radio. Les capteurs 1.1-1.n sont également adaptés pour détecter des événements se produisant dans une zone de surveillance 8. Aucune limitation n'est attachée au type de capteurs employés ici. Il peut s'agir à titre d'exemple de capteurs de présence, d'accéléromètres, de gyroscopes etc.

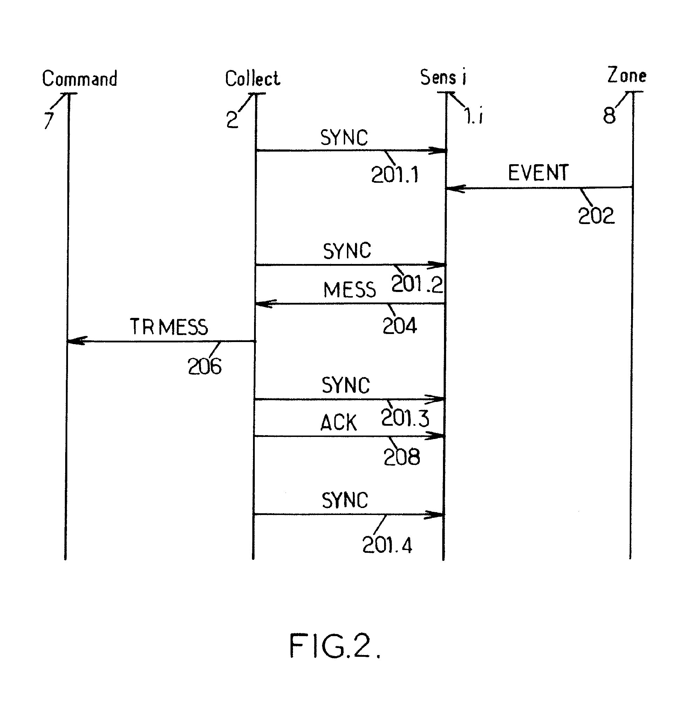

Sur détection d'un évènement dans la zone de surveillance 8, les capteurs 1.1-1.n sont adaptés pour émettre en direction du collecteur 2 un message de signalisation d'évènement en bande ultra large à code de saut temporel. Le protocole de communication entre le collecteur 2 et les capteurs 1.1-1.n sera mieux compris au regard de la figure 2 détaillée ci-après.

Le système peut comprendre également un dispositif de traitement 7 relié au collecteur 2 qui permet de traiter les messages de signalisation d'évènement initialement émis par les capteurs 1.1-1.n.

Le système de détection peut également comprendre un brouilleur 5, adapté pour émettre des signaux en ultra large bande selon un code de saut temporel aléatoire, ce qui permet d'envoyer des signaux non significatifs à un tiers souhaitant intercepter les communications entre le collecteur 2 et le réseau de capteurs 1.1-1.n et d'ainsi compliquer l'obtention du ou des codes de saut permettant les communications dans le système. Dans une réalisation de l'invention, les fonctions de brouillage du brouilleur 5 sont intégrées au collecteur 2.

La figure 2 illustre un exemple de réalisation d'un procédé de communication entre un capteur 1.i, adapté pour détecter des événements dans la zone de surveillance 8, et le collecteur 2 relié au dispositif de traitement 7. Ce procédé de communication peut être généralisé aux autres capteurs 1.1-1.n du système précédemment décrit.

Dans un mode de réalisation, le collecteur 2 est adapté pour émettre périodiquement un message de synchronisation 201.1-201.4 en direction du capteur 1.i. La période correspondant à un cycle peut être divisée en une pluralité de créneaux temporels, le premier d'entre eux étant, dans une réalisation de l'invention, dédié à l'émission de messages de synchronisation par le collecteur 2. Dans une réalisation avec plusieurs capteurs telle que représentée sur la figure 1, le collecteur 2 envoie les messages de synchronisation 201.1-201.4 à l'ensemble des capteurs du réseau. Le message de synchronisation est transmis préférentiellement avec un code de saut fixe, afin d'éviter l'émission au préalable d'un message supplémentaire pour la synchronisation du collecteur 2 et du capteur 1.i. Le capteur 1.i a connaissance du code de saut fixe et est apte à recevoir le message de synchronisation.

Un message de synchronisation peut être structuré de la manière représentée sur la figure 3.a. Le message de synchronisation peut comprendre une séquence de synchronisation 31, un germe 32, une option d'acquittement 33 et des données optionnelles 34. La séquence de synchronisation 31 est composée d'un ensemble de symboles connus du collecteur 2 et du capteur 1.i afin qu'ils puissent se synchroniser et ainsi recevoir le reste du message de synchronisation avec succès. Le germe 32 peut être généré aléatoirement par le collecteur 2 et est utilisé par le collecteur 2 et par le capteur 1.i pour générer de manière pseudo-aléatoire un code de saut ou une séquence de codes de saut qui pourra être utilisée pour l'envoi de messages de signalisation d'évènement durant la période associée au cycle de transmission du message de synchronisation. Le mode de génération du germe ou de la séquence de germes pseudo-aléatoire permet d'obtenir le même germe ou la même séquence au niveau du collecteur 2 et des capteurs 1.1-1.n à partir d'un unique germe pour une période correspondant à un cycle donné, ce qui améliore la sécurité d'un tel procédé de communication.

L'option d'acquittement 33 définit le mode de transmission d'un message d'acquittement pendant la période suivant l'émission du message de synchronisation. Il est ainsi possible de prévoir l'envoi d'un message d'acquittement lors d'un créneau temporel consécutif à l'envoi des messages de synchronisation, donc au premier créneau. Dans une réalisation, les messages d'acquittement peuvent être transmis au cours du deuxième créneau temporel de la période correspondant à un cycle de transmission du message de synchronisation. Il est également concevable de prévoir l'utilisation d'une pluralité de créneaux temporels pour l'envoi de messages d'acquittement, par exemple dans le cas où le collecteur 2 a un nombre conséquent de messages d'acquittement à envoyer.

Les données optionnelles 34 peuvent, à titre d'exemple, constituer un espace réservé pour l'attachement d'informations supplémentaires liées à la détection et peuvent être des données de contexte. Les données optionnelles 34 peuvent également définir un paramètre permettant de fixer le nombre de symboles consécutifs d'un message qui seront agencés temporellement selon le même code d'étalement.

Le capteur 1.i peut être initialement dans un mode de réception désactivé ou mode de sommeil, lui permettant de réduire sa consommation d'énergie lorsqu'il n'est pas actif. Dans ce mode, le capteur ne reçoit pas les messages de synchronisation du collecteur 2. Le capteur 1.i peut cependant détecter un évènement dans la zone de surveillance 8. Dans la réalisation présentée ici, le capteur 1.i détecte un évènement 202. Le capteur 1.i passe alors du mode de sommeil à un mode de réception activé dans lequel il est adapté pour recevoir un message de synchronisation. En effet, comme précédemment décrit, le message de synchronisation est émis selon un code de saut fixe, qui est connu du capteur 1.i qui peut donc configurer sa réception de manière à recevoir un message de synchronisation défini par un tel code de saut. Dans une réalisation de l'invention, le capteur 1.i est en mode de réception activé permanent et reçoit donc à chaque cycle le message de synchronisation du collecteur 2. Le capteur 1.i peut donc générer et transmettre un message de signalisation d'évènement au cours du cycle pendant lequel l'événement a été détecté, selon un code de saut généré à la réception du message de synchronisation du cycle correspondant.

Le message de synchronisation 201.2 est émis par le collecteur 2 en direction du capteur 1.i qui le reçoit.

Le capteur 1.i est adapté pour extraire le germe 32 contenu dans le message de synchronisation et pour générer un message de signalisation d'évènement 204 dont la structure est représentée, à titre illustratif sur la figure 3.b. Le message de synchronisation peut être représenté sous la forme d'un ensemble de symboles. A titre d'exemple, dans le cas d'un message numérique, un symbole peut représenter un bit. Le message de signalisation d'évènement peut comporter une séquence de synchronisation 41, des données d'identification de capteur 42, des données de détection d'évènement 43, une date 44 et des données optionnelles 45.

Les séquences de synchronisation 41, appelées également préambule de synchronisation 41, utilisées pour les messages de signalisation d'évènement peuvent être fixes et permettent donc de repérer le début d'un message pour le collecteur 2. Le préambule de synchronisation 41 peut également être généré de manière pseudo-aléatoire par le capteur à partir du germe reçu dans le message de synchronisation.

Les données d'identification du capteur 42 permettent au collecteur 2 d'identifier le capteur émetteur du message de signalisation d'évènement 204.

Les données de détection d'évènement 43 permettent de signifier au collecteur 2 qu'un évènement particulier a été détecté. Ces données peuvent être relatives à une mesure du capteur par exemple.

La date 44 permet d'attacher une information temporelle à l'événement détecté. La date 44 peut être calculée par le capteur 1.i à partir d'une horloge interne par exemple. Les données optionnelles 45 constituent un espace réservé pour l'adjonction d'informations supplémentaires liées à la détection et peuvent être des données de contexte.

Dans une réalisation de l'invention, les données d'identification de capteur 42, les données de détection d'évènement 43, la date 44 et les données optionnelles 45 peuvent êtres transmises sous forme chiffrée, ce qui permet d'améliorer la sécurité liée au procédé de communication selon l'invention.

Avant transmission du message de signalisation d'évènement 204 par le capteur 1.i, le message est transformé en une suite d'impulsions à bandes ultra large en appliquant un code d'étalement, dans cet exemple un code de saut généré pseudo-aléatoirement, pour un ou plusieurs symboles du message. En effet, dans une réalisation, une séquence de codes de saut est générée, chacun des codes de saut permettant l'agencement temporel d'un symbole ou d'un ensemble de n symboles du message de signalisation d'évènement 204, n entier supérieur à un.

Seul le code de saut permettant l'agencement de la séquence de synchronisation peut être supposé fixe dans cet exemple de réalisation, afin de simplifier une synchronisation entre le collecteur 2 et le capteur 1.i. Pour améliorer la sécurité de la transmission du message de signalisation d'évènement 204, le code de saut étant fixe, le contenu de la séquence de synchronisation 41 peut être modifié à chaque message et généré pseudo-aléatoirement à partir du germe 32. Le code de saut utilisé pour l'agencement temporel de la séquence de synchronisation peut également être généré à partir du germe contenu dans le message de synchronisation et ainsi être spécifique à un cycle.

Ainsi, une séquence de codes de saut peut être générée, chaque code de saut étant associé à une partie d'un créneau de la période correspondant au cycle, à partir du deuxième créneau, dans le cas sans message d'acquittement, ou à partir du troisième créneau, dans le cas avec message d'acquittement. La partie d'un créneau peut correspondre à la durée d'émission d'au moins un symbole du message à transmettre. Ainsi, à l'exception des symboles relatifs au préambule de synchronisation, les symboles du message de signalisation d'évènement 204 sont émis selon des codes de saut dont l'évolution est dynamique et qui sont prédéfinis au moyen de la génération pseudo aléatoire de la séquence de codes de saut à partir du germe 32. Pour chaque cycle, le collecteur 2 et le capteur 1.i savent par conséquent quel code de saut sera utilisé pour l'émission d'un ou de plusieurs symboles au cours d'une partie donnée d'un des créneaux temporels de la période correspondant au cycle. La sécurité associée aux échanges de messages est donc accrue.

Pour l'émission des symboles du préambule de synchronisation 41, le code de saut utilisé est fixe mais le contenu du préambule de synchronisation 41 est déterminé en fonction d'informations, notamment le germe 32, contenues dans le message de synchronisation transmis pour la période correspondante.

Ainsi, dans le cadre du procédé de communication selon l'invention, le capteur 1.i va déterminer le préambule de synchronisation 41 ainsi que les codes de saut à appliquer pour l'émission de symboles du message de signalisation d'évènement 204 pour chaque partie des créneaux temporels de la période considérée. De son côté, le collecteur 2 configure convenablement une interface radio, en fonction du germe 32, pour qu'il y ait une concordance de configuration entre l'émission de messages de signalisation d'évènement 204 et leur réception. Cette concordance est permise par la génération pseudo-aléatoire de la séquence de codes de saut sur la base du germe 32, qui est commun au collecteur 2 et au capteur 1.i.

Le collecteur 2 est configuré pour la réception de messages sur la période dédiée aux émissions de messages de signalisation d'évènement 204. En effet, au moyen du germe 32 généré aléatoirement, le collecteur 2 a configuré son interface radio de manière à pouvoir recevoir des messages composés de symboles, chaque symbole étant agencé temporellement en fonction du code de saut correspondant à la partie du créneau temporel pendant laquelle le symbole est émis.

Le collecteur, sur réception du message de signalisation d'évènement 204, peut extraire les données contenues dans le message de signalisation d'évènement et les transmettre dans un message de transmission 206 au dispositif de traitement 7 qui est adapté pour traiter les données. Dans une réalisation de l'invention, le collecteur 2 accuse réception de chaque message de signalisation d'évènement 204 en envoyant à destination des capteurs un message d'acquittement 208.

Le message d'acquittement 208 peut avoir la structure représentée sur la figure 3.c. Le message d'acquittement 208 peut ainsi comprendre une séquence de synchronisation 51 ainsi qu'une pluralité de données d'acquittement 52.1-52.k. Par exemple, le nombre k de données d'acquittement peut être défini en fonction d'une taille maximale acceptée pour le message d'acquittement 208. Chacune des données d'acquittement 52.1-52.k est relative à un message de signalisation d'évènement 204 envoyé par un des capteurs 1.1-1.n du système lors d'un cycle précédent. A cet effet, les données d'acquittement 52.2, choisies arbitrairement et à titre d'exemple, peuvent comprendre des données d'identification d'un capteur 53.2, des données d'identification d'évènement 54.2 et des données optionnelles 55.2. Les données d'identification d'un capteur 53.2 désignent le capteur ayant émis le message de signalisation d'évènement acquitté par les données d'acquittement 52.2. Les données d'identification d'évènement 54.2 désignent l'événement détecté par le capteur ayant émis le message de signalisation d'évènement acquitté par les données d'acquittement 52.2. Les données optionnelles 55.2 constituent un espace réservé pour l'adjonction d'informations supplémentaires liées à la détection et peuvent être des données de contexte.

Le message d'acquittement peut être émis, dans un mode de réalisation, lors du deuxième créneau d'un cycle. Ainsi, il est émis avec un agencement temporel défini par une séquence de codes de saut ou par un code de saut obtenu par génération pseudo-aléatoire à partir d'un germe généré aléatoirement et transmis aux capteur 1.1-1.n lors du premier créneau de la période correspondante (dans le message de synchronisation correspondant à la période). Par conséquent, les capteurs 1.1-1.n ayant émis un message de signalisation d'évènement 204 peuvent configurer leur interface radio de manière à pouvoir recevoir, lors du deuxième créneau d'un des cycles postérieurs à l'émission du message de signalisation d'évènement, le message d'acquittement. Dans d'autres variantes, plusieurs messages d'acquittement 208 peuvent être émis, sur une pluralité de créneaux, qui peut par exemple être définie dans le message de synchronisation du cycle correspondant.

Ainsi, le capteur 1.i peut recevoir le message d'acquittement 208 lors du cycle directement consécutif à l'envoi du message de signalisation d'évènement 204. Il a au préalable reçu le message de synchronisation 201.3 du cycle consécutif et est donc configuré pour la réception du message d'acquittement 208. A la réception du message d'acquittement 208, le capteur 1.i vérifie que des données d'acquittement 52.1-52.k sont relatives au message de signalisation d'évènement 204 qu'il a précédemment émis. Si des données d'acquittement 52.1-52.k correspondent, le capteur 1.i peut passer, dans un mode de réalisation, dans un mode de réception désactivé ou mode de sommeil, jusqu'à une prochaine détection d'un évènement par exemple et ne recevra donc pas le message de synchronisation 201.4 du cycle suivant.

En revanche, si aucune des données 52.1-52.k ne correspond au message de signalisation d'évènement 204, le capteur 1.i peut, dans un mode de réalisation de l'invention, réémettre le message de signalisation d'évènement 204 lors d'un des créneaux temporels suivants, en le transmettant selon un agencement temporel défini par une séquence de codes de saut générée pseudo-aléatoirement à partir du germe transmis lors du cycle de transmission du message d'acquittement 208 (et non plus à partir du germe utilisé pour l'émission initiale du message de signalisation d'évènement 204). Dans un autre mode de réalisation, le capteur 1.i peut définir un nombre de cycles au bout desquels, s'il n'a toujours pas reçu de données d'acquittement correspondant au message de signalisation d'évènement, il réémet le message de signalisation d'acquittement, toujours selon un agencement temporel défini par une séquence de codes de saut générée aléatoirement à partir du germe transmis pour le cycle en cours. Le capteur 1.i peut également vérifier que l'espace dédié aux données d'acquittement 52.k est utilisé lors de chacun des cycles. En effet, si cet espace est utilisé, un grand nombre de données d'acquittement doivent être envoyées par le collecteur 2 et le capteur 1.i ne réémet pas de message de signalisation d'évènement tant qu'un espace n'est pas libre dans le message d'acquittement. Cette réalisation permet de ne pas surcharger le collecteur 2 en renvoyant à chaque cycle un message de signalisation d'évènement.

La figure 4 illustre un organigramme représentant les étapes mises en oeuvre par un capteur pour l'émission ou la réémission d'un message de détection d'évènement selon l'invention. On considère, dans cet exemple, le capteur 1.i illustré sur la figure 2.

Le capteur 1.i est adapté pour détecter, lors d'une étape 401, un évènement dans la zone de surveillance 8. Dans un mode de réalisation, le capteur 1.i est initialement dans un mode de réception désactivé, afin d'économiser de l'énergie, et passe dans un mode de réception activé sur détection d'un évènement.

Sur détection de l'évènement, le capteur 1.i attend le prochain message de synchronisation du collecteur 2, qu'il reçoit lors d'une étape 402 et démodule le message reçu lors d'une étape 403. Le capteur 1.i est apte à démoduler le message de synchronisation qui est transmis avec un agencement temporel défini par un code de saut connu du capteur 1.i et du collecteur 2. Ainsi, sur détection d'un évènement, le capteur 1.i peut configurer son interface radio pour la réception de messages définis par un tel code de saut. Le message de synchronisation peut avoir la structure illustrée sur la figure 3.a. Lorsque le message de synchronisation est démodulé, le capteur 1.i peut extraire lors d'une étape 404 le germe du message de synchronisation.

En parallèle des étapes 402, 403 et 404, le capteur 1.i génère lors d'une étape 405 un message de signalisation d'évènement à partir des données obtenues lors de la détection de l'évènement. Ce message de signalisation d'évènement peut avoir la structure décrite sur la figure 3.b. Le capteur 1.i peut ensuite sélectionner de manière aléatoire lors d'une étape 406, un créneau temporel de la période correspondant au cycle d'émission d'un message de synchronisation, pour la transmission du message de signalisation d'évènement. Dans un mode de réalisation, le premier créneau est utilisé pour l'émission d'un message de synchronisation par le collecteur 2 et le deuxième créneau est utilisé pour l'émission d'un message d'acquittement par le collecteur 2. Le créneau sélectionné pour l'émission du message de signalisation par le capteur 1.i peut donc être sélectionné parmi les créneaux à partir du troisième créneau. Si le collecteur 2 n'émet pas de message d'acquittement, le créneau sélectionné pour l'émission du message de signalisation par le capteur 1.i peut être sélectionné parmi les créneaux à partir du deuxième créneau. Aucune restriction n'est attachée à la méthode de sélection du créneau d'émission. En effet, dans une autre réalisation, le capteur 1.i peut coopérer avec d'autres capteurs pour ne pas émettre de messages de détection d'évènement lors du même créneau et d'ainsi éviter une collision au niveau de la réception du collecteur 2.

Lorsque le germe est extrait et que le créneau est sélectionné, le capteur génère de manière pseudo-aléatoire les codes de saut pour la période en cours. Le capteur 1.i identifie ensuite lors d'une étape 407 la séquence de codes de saut utilisée pour l'émission du message de détection d'évènement lors du créneau sélectionné. Le capteur 1.i configure lors d'une étape 408 son interface radio pour l'émission selon la séquence de codes de saut correspondant au créneau sélectionné. Le message de signalisation d'évènement est modulé et émis à destination du collecteur 2 lors d'une étape 409 selon la séquence de codes de saut correspondant au créneau sélectionné. Cette émission est effectuée pendant le créneau sélectionné.

Lors d'une étape 410, si le capteur 1.i n'attend aucun acquittement, il désactive son mode de réception en attendant la prochaine détection d'un évènement dans la zone de surveillance 8. A cet effet, le capteur 1.i peut consulter une table des acquittements en attente qu'il stocke. Si le capteur 1.i attend un acquittement, il vérifie qu'il est correctement synchronisé avec le collecteur 2, lors d'une étape 411, pour la réception d'un message d'acquittement. Le message d'acquittement peut avoir la structure représentée sur la figure 3.c. Si le capteur 1.i est synchronisé, il peut ainsi, lors d'une étape 412, consulter les données d'acquittement 33 du message de synchronisation pour le cycle en cours, afin de savoir si des messages d'acquittement sont transmis dans le deuxième créneau de la période correspondant au cycle ou lors de créneaux suivants. Dans le cas où aucun message d'acquittement pour ce cycle n'est prévu, le capteur 1.i peut prévoir lors d'une étape 416 la réémission d'un message de signalisation d'évènement.

Si le capteur 1.i n'est pas synchronisé avec le collecteur 2 lors de l'étape 411, le capteur 1.i configure son interface radio pour la réception du prochain message de synchronisation du collecteur 2. Le capteur reçoit lors d'une étape 413 le message de synchronisation du collecteur 2 et démodule ce message lors d'une étape 414. Il consulte lors d'une étape 415 les données d'acquittement contenues dans le message de synchronisation démodulé afin de savoir si un message d'acquittement est transmis lors du deuxième créneau de la période correspondant au cycle en cours. Dans le cas où aucun message d'acquittement pour ce cycle n'est prévu, le capteur 1.i peut prévoir lors d'une étape 416 la réémission d'un message de signalisation d'évènement. Si la transmission d'un message d'acquittement est prévue pendant le deuxième créneau, le capteur 1.i extrait lors d'une étape 417 le germe du message de synchronisation.

A la suite de l'étape 417, ou à la suite de l'étape 412 dans le cas où la transmission d'un message d'acquittement est prévue, le capteur 1.i génère lors d'une étape 418 les codes de saut de manière pseudo-aléatoire à partir du germe reçu dans le message de synchronisation du cycle en cours et en déduit la séquence de codes de saut qui sera utilisée pour l'émission du message d'acquittement par le collecteur 2 lors du deuxième créneau de la période correspondant au cycle en cours. L'interface radio du capteur 1.i est configurée lors d'une étape 419 pour la réception de messages dont l'agencement temporel est défini par la séquence de codes de saut pour le deuxième créneau de la période correspondant au cycle en cours. Le message d'acquittement du collecteur 2 est reçu par le capteur 1.i durant le deuxième créneau lors d'une étape 420. Le message d'acquittement reçu est démodulé lors d'une étape 421 et traité afin de vérifier lors d'une étape 422 que des données d'acquittement 52.1-52.k contenues dans le message d'acquittement correspondent au message de signalisation d'évènement envoyé lors de l'étape 409.

Si aucune des données d'acquittement 52.1-52.k ne correspond au message de signalisation d'évènement envoyé lors de l'étape 409, le capteur 1.i peut prévoir lors d'une étape 416 la réémission d'un message de signalisation d'évènement.

Si des données d'acquittement 52.1-52.k correspondent au message de signalisation d'évènement envoyé lors de l'étape 409, le capteur 1.i met à jour la table des acquittements en attente lors d'une étape 423. La table mise à jour est par la suite consultée lors de l'étape 410 précédemment décrite.

La figure 5 illustre un organigramme représentant les étapes mises en oeuvre par un collecteur pour l'émission de messages de synchronisation et d'acquittement selon l'invention. On considère, dans cet exemple, le collecteur 2 illustré sur la figure 1 adapté pour communiquer avec une pluralité de capteurs 1.1-1.n.

Lors d'une étape 501, le collecteur 2, relié à une horloge par exemple, attend le prochain cycle de transmission d'un message de synchronisation. Le collecteur 2 génère, de manière aléatoire par exemple, un germe pour la génération pseudo-aléatoire de codes de saut. Le collecteur configure ainsi lors d'une étape 505 une interface de réception pour la réception de messages dont l'agencement est défini par les codes de saut générés pseudo-aléatoirement.

En parallèle de l'étape 505, le collecteur génère lors d'une étape 503 un message de synchronisation dont la structure peut être celle représentée sur la figure 3.a. Le collecteur utilise à cet effet le germe généré aléatoirement et définit si des acquittements seront transmis lors du deuxième créneau de la période correspondant au cycle de transmission du message de synchronisation ou lors de créneaux suivants. Le message de synchronisation est ensuite modulé selon un code de saut qui est fixe et connu des capteurs 1.1-1.n. Le message de synchronisation est envoyé lors d'une étape 504 au réseau de capteurs 1.1-1.n.

Le collecteur 2 vérifie ensuite lors d'une étape 506 que des acquittements sont à envoyer si des messages de signalisation d'évènement ont été reçu lors de cycles antérieurs.

Si aucun acquittement n'est à envoyer, le collecteur 2 adopte lors d'une étape 509 la configuration de réception déterminée à l'étape 505 pour les créneaux restants de la période correspondant au cycle en cours.

Si un ou plusieurs acquittements sont à envoyer, le collecteur 2 génère un message d'acquittement lors d'une étape 507 comprenant des données d'acquittement 52.1-52.k pour acquitter entre 1 et k messages de signalisation d'évènement reçus précédemment.

Le collecteur 2 module, lors d'une étape 508, le message d'acquittement en fonction de la séquence de codes de saut associée au deuxième créneau de la période correspondant au cycle en cours et envoie le message d'acquittement modulé à destination du réseau de capteurs 1.1-1.n.

Le collecteur 2 adopte lors d'une étape 509 la configuration de réception déterminée à l'étape 505 pour les créneaux restants de la période correspondant au cycle en cours.

Le collecteur 2 vérifie lors d'une étape 510 qu'il reste des créneaux dédiés à la réception de messages de signalisation d'évènement du réseau de capteurs 1.1-1.n.

Si le cycle est fini et qu'il ne reste plus aucun créneau pour la réception de messages de signalisation d'évènement, le collecteur commence un nouveau cycle lors de l'étape 501 décrite précédemment.

S'il reste des créneaux pour la réception de messages de signalisation d'évènement, le collecteur 2 est configuré lors d'une étape 511 pour la réception de messages dont l'agencement temporel est défini par la séquence de codes de saut associée au prochain créneau de la période correspondant au cycle en cours.

Le collecteur 2 vérifie lors d'une étape 512 si un message de signalisation d'évènement est reçu lors du créneau en cours.

Si aucun message de signalisation d'évènement n'est reçu, le collecteur 2 vérifie à nouveau qu'il reste des créneaux dédiés à la réception de messages de signalisation d'évènement du réseau de capteurs 1.1-1.n lors de l'étape 510 précédemment décrite.

Si un message de signalisation est reçu, le collecteur 2 démodule lors d'une étape 513 le message de signalisation reçu et transmet lors d'une étape 514 le message de signalisation d'évènement démodulé au dispositif de traitement 7. Le collecteur 2 peut également mettre à jour la table des acquittements en attente afin d'émettre ultérieurement un acquittement pour le message de signalisation d'évènement reçu.

Le collecteur 2 vérifie à nouveau qu'il reste des créneaux dédiés à la réception de messages de signalisation d'évènement du réseau de capteurs 1.1-1.n lors de l'étape 510 précédemment décrite.

La figure 6 représente structurellement le capteur 1.i selon un mode de réalisation de l'invention.

Le capteur 1.i comprend un détecteur d'évènement SENS adapté pour détecter des événements dans la zone de surveillance 8. Aucune limitation n'est attachée au type de détecteur employé. Sur détection d'un évènement, le détecteur SENS est adapté pour transmettre des données d'évènements à un processeur PROC1 du capteur 1.i. Le processeur PROC1 est adapté pour générer un message de signalisation d'évènement tel que représenté sur la figure 3.b.

Le capteur 1.i comprend en outre une interface de réception INTR et une interface d'émission INTT adaptées pour communiquer avec un collecteur selon l'invention. Ainsi, sur réception d'un message de synchronisation, tel que représenté sur la figure 3.a, du collecteur 2, dont l'agencement temporel est défini par un code de saut fixe, ou par une séquence de codes de saut fixe, l'interface de réception INTR est adaptée pour la réception de messages selon un tel code et transmet le message de synchronisation à un démodulateur DEM2. Le démodulateur DEM2 est adapté pour démoduler le message de synchronisation et pour en extraire un germe, une option d'acquittement et d'éventuelles données optionnelles et pour les stocker dans une mémoire MEM1 du capteur 1.i. Le processeur PROC1 est relié à la mémoire MEM1 et adapté pour requérir le germe stocké afin de le transmettre à un générateur GEN1 de nombre pseudo-aléatoire. Le générateur GEN1 peut être adapté pour mettre en oeuvre un algorithme de génération pseudo-aléatoire, tel qu'un algorithme PRNG (pour « Pseudo-Random Number Generator ») par exemple. Le générateur GEN1 est adapté pour générer des codes de saut à partir du germe. Chaque code de saut généré est associé à une partie d'un créneau temporel d'une période correspondant à un cycle de transmission du message de synchronisation. Le processeur PROC1 est synchronisé au moyen d'une horloge CLK1 du capteur 1.i. Il peut ainsi attacher une date à l'événement dans le message de signalisation d'évènement. Le processeur PROC1 est également adapté pour sélectionner un créneau temporel pour la transmission du message de détection d'évènement. Lors de l'entrée dans le créneau temporel sélectionné, le processeur PROC1 transmet à un modulateur MOD1 le message de signalisation d'évènement ainsi qu'une séquence de codes de saut correspondant au créneau temporel sélectionné. Le processeur PROC1 transmet également le message de signalisation d'évènement à la mémoire MEM1 pour stockage, afin d'être comparé ultérieurement avec un message d'acquittement reçu.

Le modulateur MOD1 module le message de signalisation d'évènement en un signal ultra large bande par saut temporel avec un agencement temporel défini par la séquence de codes de saut. Le modulateur MOD1 transmet le message de signalisation d'évènement ainsi modulé vers l'interface d'émission INTT pour une émission à destination d'un collecteur de données de détection d'évènement. A chaque message de signalisation d'évènement envoyé, le processeur PROC1 peut mettre à jour une table des acquittements en attente stockée dans la mémoire MEM1

L'interface de réception INTR peut également recevoir un message d'acquittement durant le deuxième créneau d'un cycle ou durant un créneau suivant. Le message d'acquittement peut présenter la structure représentée sur la figure 3.c. Elle est à cet effet configurée pour la réception de messages dont l'agencement temporel est défini par la séquence de codes de saut associée au deuxième créneau temporel de la période correspondant au cycle en cours. Le message d'acquittement est ensuite démodulé par un démodulateur DEM1 et est stocké dans la mémoire MEM1. Le processeur peut comparer un message de signalisation d'évènement transmis précédemment et stockée dans la mémoire MEM1 à des données d'acquittement comprises dans le message d'acquittement. Si ces données correspondent, le message d'acquittement et le message de signalisation d'évènement peuvent être effacés de la mémoire MEM1 et la table des acquittements en attente peut être mise à jour. Dans le cas contraire, le processeur PROC1 peut commander la réémission du message de signalisation d'évènement. Dans une réalisation de l'invention, la mémoire MEM1 et le processeur PROC1 peuvent garantir la confidentialité des donnes stockées et des codes de saut au moyen d'une technologie « tamperproof » par exemple.

Dans un mode de réalisation, l'interface de réception INTR et l'interface d'émission INTT peuvent être mutualisées. Elles peuvent par exemple être regroupées sous la forme d'une interface sans fil 4.i telle que représentée sur la figure 1.

La figure 7 représente structurellement le collecteur 2 selon un mode de réalisation de l'invention.

Le collecteur 2 comprend une interface de réception REC et une interface d'émission TR pour une communication avec un réseau de capteurs de détection d'évènement. Dans un mode de réalisation, l'interface de réception REC et l'interface d'émission TR peuvent être mutualisées. Elles peuvent par exemple être regroupées sous la forme d'une interface sans fil 3 telle que représentée sur la figure 1.

Le collecteur 2 comprend également un processeur PROC2 relié à une horloge CLK2. Le processeur PROC2 est adapté pour générer aléatoirement un germe et pour générer un message de synchronisation comprenant le germe de manière périodique ou cyclique. Le message de synchronisation peut présenter la structure illustrée sur la figure 3.a. L'horloge CLK2 permet de synchroniser le processeur PROC2 et de diviser la période entre les émissions de deux messages de synchronisation en une pluralité de créneaux temporels, le premier créneau étant réservé pour l'émission du message de synchronisation en direction des capteurs du réseau.

Le message de synchronisation est transmis avec un code de saut prédéfini et connu des capteurs du réseau à un modulateur MOD2 du collecteur 2. Le modulateur MOD2 est adapté pour moduler le message de synchronisation en signaux ultra large bande à saut temporel dont l'agencement temporel est défini par le code de saut prédéfini. Le message de synchronisation ainsi modulé est transmis à l'interface d'émission pour une émission à destination du réseau de capteurs. Le processeur PROC2 est relié à un générateur GEN2 pseudo-aléatoire de codes de saut. Le générateur GEN2 génère de manière pseudo aléatoire des codes de saut à partir du germe. Le processeur PROC2 associe chaque code de saut généré à une partie d'un créneau temporel d'une période correspondant à un cycle de transmission du message de synchronisation. L'interface de réception peut ainsi être configurée à chaque cycle pour la réception de messages modulés à partir des codes de saut générés aléatoirement.

Le collecteur 2 peut ainsi recevoir des messages de signalisation d'évènement depuis les capteurs du réseau dans chaque créneau temporel du cycle à partir du deuxième créneau. Dans un mode de réalisation, le collecteur 2 émet des messages d'acquittement lors du deuxième créneau de la période. Par conséquent, les messages de signalisation sont reçus dans chaque créneau temporel à partir du troisième créneau temporel.

A la réception d'un message de signalisation d'évènement, le message est transmis par l'interface de réception REC au démodulateur DEM2 qui démodule le message reçu et qui peut le stocker en mémoire MEM2. Le message de signalisation d'évènement peut également être transmis pour traitement à un dispositif de traitement par le biais d'une interface de communication INT du collecteur 2.

Dans un mode de réalisation avec messages d'acquittement, un acquittement est envoyé à chaque capteur ayant transmis un message de signalisation d'évènement. Ces messages d'acquittement peuvent être envoyés durant le second créneau temporel et sont ainsi modulés par le modulateur MOD2 en signaux ultra large bande à saut temporel dont l'agencement temporel est défini par la séquence de sauts temporel associée au deuxième créneau temporel de la période correspondant à la période en cours.

Dans une réalisation de l'invention, la mémoire MEM2 et le processeur PROC2 peuvent garantir la confidentialité des donnes stockées et des codes de saut au moyen d'une technologie « tamperproof » par exemple.

Bien entendu, la présente invention ne se limite pas à la forme de réalisation décrite ci-avant à titre d'exemple ; elle s'étend à d'autres variantes.

## Revendications

1. Procédé de communication entre au moins un capteur (1.i) détecteur d'évènement (202) et un collecteur (2) de données de détection d'évènement (43) transmises par le capteur sous la forme d'un message de signalisation d'évènement (204) dont la modulation est définie par au moins un code d'étalement, **caractérisé en ce que** le procédé comprend les étapes mises en oeuvre par le capteur:
- sur détection d'un évènement, génération de données de détection d'évènement ;
- réception d'un message de synchronisation (201.1-201.4) émis par le collecteur, ledit message de synchronisation comprenant un germe (32) pour une génération pseudo-aléatoire d'au moins un code d'étalement ;
- génération pseudo-aléatoire d'au moins un code d'étalement à partir dudit germe ;
- émission d'un message de signalisation d'évènement dont la modulation est définie par ledit au moins un code d'étalement généré aléatoirement, le message de signalisation d'évènement comprenant les données de détection d'évènement.

2. Procédé selon la revendication 1, dans lequel le message de synchronisation est émis cycliquement, le germe (32) qu'il comprend étant spécifique au cycle d'émission du message de synchronisation et dans lequel le capteur détecte l'événement lors d'un cycle donné et traite le message de synchronisation du cycle qui suit ledit cycle donné.

3. Procédé selon la revendication 2, dans lequel seule une partie du germe est spécifique à chaque cycle, l'autre partie du germe étant prédéfinie entre le capteur (1.i) et le collecteur (2).

4. Procédé selon la revendication 1, dans lequel le code d'étalement est un code de saut et dans lequel le message de signalisation (204) est émis sous la forme d'un signal ultra large bande par saut temporel défini par ledit code de saut.

5. Procédé selon la revendication 2, dans lequel une période correspondant à un cycle d'émission de message de synchronisation (201.1-201.4) par le collecteur (2) est divisée en une pluralité de créneaux temporels, dans lequel le message de synchronisation du collecteur est reçu lors du premier créneau temporel de chaque cycle et dans lequel le message de signalisation (204) est émis lors d'un créneau temporel suivant.

6. Procédé selon la revendication 5, dans lequel une pluralité de codes d'étalement est générée, ladite pluralité étant divisée en séquences de codes d'étalement, chaque séquence de codes d'étalement étant associée à un créneau temporel à partir du deuxième créneau temporel et chaque message émis dans un créneau temporel est émis avec une modulation définie par la séquence de codes d'étalement associée audit créneau temporel.

7. Procédé selon la revendication 5, dans lequel le message de signalisation d'évènement (204) comprend un préambule de synchronisation pour la synchronisation du capteur et du collecteur, ledit préambule de synchronisation étant émis avec une modulation définie par un unique code d'étalement.

8. Programme d'ordinateur comportant des instructions pour la mise en oeuvre du procédé selon la revendication 1, lorsque ce programme est exécuté par un processeur.

9. Procédé de communication entre au moins un capteur (1.i) détecteur d'évènement (202) et un collecteur (2) de données de détection d'évènement (43) transmises par le capteur sous la forme d'un message de signalisation d'évènement (204) dont la modulation est définie par au moins un code d'étalement, **caractérisé en ce que** le procédé comprend les étapes mises en oeuvre par le collecteur:
- émission d'un message de synchronisation (201.1-201.4), ledit message de synchronisation comprenant un germe pour une génération pseudo-aléatoire d'au moins un code d'étalement ;
- génération pseudo-aléatoire d'au moins un code d'étalement à partir dudit germe ; et
- réception d'un message de signalisation d'évènement dont la modulation est définie par ledit au moins un code d'étalement, ledit message de signalisation d'évènement comprenant des données de détection d'évènement.

10. Programme d'ordinateur comportant des instructions pour la mise en oeuvre du procédé selon la revendication 9, lorsque ce programme est exécuté par un processeur.

11. Système de communication comprenant au moins un capteur (1.i) détecteur d'évènement (202) et un collecteur (2) de données de détection d'évènement (43) transmises par le capteur sous la forme d'une message de signalisation d'évènement (204) dont la modulation est définie par au moins un code d'étalement, **caractérisé en ce que** ledit collecteur comprend des moyens pour :
- l'émission d'un message de synchronisation (201.1-201.4) comprenant un germe ;
- la réception d'un message de signalisation comprenant des données de détection dudit capteur;
et **en ce que** ledit capteur comprend des moyens pour :
- détecter un évènement ;
- générer des données de détection d'évènement ;
- recevoir un message de synchronisation du collecteur, ledit message de synchronisation comprenant un germe pour une génération pseudo-aléatoire d'au moins un code d'étalement ;
- générer pseudo-aléatoirement au moins un code d'étalement à partir dudit germe; et
- émettre un message de signalisation d'évènement dont la modulation est définie par ledit au moins un code d'étalement, le message de signalisation comprenant les données de détection d'évènement.

12. Système selon la revendication 11 comprenant en outre un brouilleur adapté pour émettre des signaux dont la modulation est définie par un code d'étalement aléatoire.

13. Collecteur de données de détection d'évènement (43), **caractérisé en ce qu'**il comprend des moyens pour :
- émettre un message de synchronisation, ledit message de synchronisation comprenant un germe pour une génération pseudo-aléatoire d'au moins un code d'étalement ;
- générer pseudo-aléatoirement au moins un code d'étalement à partir dudit germe; et
- recevoir un message de signalisation d'évènement dont la modulation est définie par ledit au moins un code d'étalement, le message de signalisation comprenant des données de détection d'évènement.

14. Capteur détecteur d'évènement (202) **caractérisé en ce qu'**il comprend des moyens pour:
- détecter un évènement ;
- générer des données de détection d'évènement ;
- recevoir un message de synchronisation, ledit message de synchronisation comprenant un germe pour une génération pseudo-aléatoire d'au moins un code d'étalement ;
- générer pseudo-aléatoirement au moins un code d'étalement à partir dudit germe; et
- émettre un message de signalisation d'évènement dont la modulation est définie par ledit au moins un code d'étalement, le message de signalisation comprenant les données de détection d'évènement.

## Patentansprüche

1. Kommunikationsverfahren zwischen mindestens einem ein Ereignis (202) erfassenden Sensor (1.i) und einem Sammler (2) von Ereignis-Erfassungsdaten (43), die vom Sensor in Form einer Ereignis-Signalisierungsmitteilung (204) übertragen werden, deren Modulation durch mindestens einen Spreizcode definiert wird, **dadurch gekennzeichnet, dass** das Verfahren die folgenden vom Sensor durchgeführten Schritte enthält:
- bei Erfassung eines Ereignisses, Erzeugung von Ereignis-Erfassungsdaten;
- Empfang einer vom Sammler gesendeten Synchronisationsmitteilung (201.1-201.4), wobei die Synchronisationsmitteilung einen Keim (32) für eine pseudozufällige Erzeugung mindestens eines Spreizcodes enthält;
- pseudozufällige Erzeugung mindestens eines Spreizcodes ausgehend von dem Keim;
- Senden einer Ereignis-Signalisierungsmitteilung, deren Modulation durch den mindestens einen zufällig erzeugten Spreizcode definiert wird, wobei die Ereignis-Signalisierungsmitteilung die Ereignis-Erfassungsdaten enthält.

2. Verfahren nach Anspruch 1, wobei die Synchronisationsmitteilung zyklisch gesendet wird, wobei der Keim (32), den sie enthält, für den Sendezyklus der Synchronisationsmitteilung spezifisch ist, und wobei der Sensor das Ereignis in einem gegebenen Zyklus erfasst und die Synchronisationsmitteilung des Zyklus verarbeitet, der auf den gegebenen Zyklus folgt.

3. Verfahren nach Anspruch 2, wobei nur ein Teil des Keims für jeden Zyklus spezifisch ist, während der andere Teil des Keims zwischen dem Sensor (1.i) und dem Sammler (2) vordefiniert ist.

4. Verfahren nach Anspruch 1, wobei der Spreizcode ein Sprungcode ist, und wobei die Signalisationsmitteilung (204) in Form eines vom Sprungcode definierten Zeitsprung-Ultrabreitbandsignals gesendet wird.

5. Verfahren nach Anspruch 2, wobei eine Periode entsprechend einem Sendezyklus einer Synchronisationsmitteilung (201.1-201.4) durch den Sammler (2) in eine Vielzahl von 2eitschlitzen aufgeteilt ist, wobei die Synchronisationsmitteilung des Sammlers im ersten Zeitschlitz jedes Zyklus empfangen wird, und wobei die Signalisationsmitteilung (204) in einem folgenden Zeitschlitz gesendet wird.

6. Verfahren nach Anspruch 5, wobei eine Vielzahl von Spreizcodes erzeugt wird, wobei die Vielzahl in Spreizcodesequenzen aufgeteilt ist, wobei jede Spreizcodesequenz einem Zeitschlitz ausgehend vom zweiten Zeitschlitz zugeordnet ist, und jede in einem Zeitschlitz gesendete Mitteilung mit einer durch die dem Zeitschlitz zugeordnete Spreizcodesequenz definierten Modulation gesendet wird.

7. Verfahren nach Anspruch 5, wobei die Ereignis-Signalisierungsmitteilung (204) eine Synchronisationspräambel zur Synchronisation des Sensors und des Sammlers enthält, wobei die Synchronisationspräambel mit einer durch einen einzigen Spreizcode definierten Modulation gesendet wird.

8. Computerprogramm, das Anweisungen zur Durchführung des Verfahrens nach Anspruch 1 aufweist, wenn dieses Programm von einem Prozessor ausgeführt wird.

9. Kommunikationsverfahren zwischen mindestens einem ein Ereignis (202) erfassenden Sensor (1.i) und einem Sammler (2) von Ereignis-Erfassungsdaten (43), die vom Sensor in Form einer Ereignis-Signalisierungsmitteilung (204) übertragen werden, deren Modulation durch mindestens einen Spreizcode definiert wird, **dadurch gekennzeichnet, dass** das Verfahren die folgenden Schritte enthält, die vom Sammler durchgeführt werden:
- Senden einer Synchronisationsmitteilung (201.1-201.4), wobei die Synchronisationsmitteilung einen Keim für eine pseudozufällige Erzeugung mindestens eines Spreizcodes enthält;
- pseudozufällige Erzeugung mindestens eines Spreizcodes ausgehend von dem Keim; und
- Empfang einer Ereignis-Signalisierungsmitteilung, deren Modulation von dem mindestens einen Spreizcode definiert wird, wobei die Ereignis-Signalisierungsmitteilung Ereignis-Erfassungsdaten enthält.

10. Computerprogramm, das Anweisungen zur Durchführung des Verfahrens nach Anspruch 9 aufweist, wenn dieses Programm von einem Prozessor ausgeführt wird.

11. Kommunikationssystem, das mindestens einen ein Ereignis (202) erfassenden Sensor (1.i) und einen Sammler (2) von Ereignis-Erfassungsdaten (43) enthält, die vom Sensor in Form einer Ereignis-Signalisierungsmitteilung (204) übertragen werden, deren Modulation durch mindestens einen Spreizcode definiert wird, **dadurch gekennzeichnet, dass** der Sammler Einrichtungen enthält:
- zum Senden einer Synchronisationsmitteilung (201.1-201.4), die einen Keim enthält;
- zum Empfang einer Signalisationsmitteilung, die Erfassungsdaten des Sensors enthält;
und dass der Sensor Einrichtungen enthält:
- zum Erfassen eines Ereignisses;
- zur Erzeugung von Ereignis-Erfassungsdaten;
- zum Empfang einer Synchronisationsmitteilung vom Sammler, wobei die Synchronisationsmitteilung einen Keim für eine pseudozufällige Erzeugung mindestens eines Spreizcodes enthält;
- zur pseudozufälligen Erzeugung mindestens eines Spreizcodes ausgehend von dem Keim; und
- zum Senden einer Ereignis-Signalisierungsmitteilung, deren Modulation von dem mindestens einen Spreizcode definiert wird, wobei die Signalisationsmitteilung die Ereignis-Erfassungsdaten enthält.

12. System nach Anspruch 11, das außerdem einen Störgeräuschgenerator enthält, der geeignet ist, um Signale zu senden, deren Modulation von einem Zufalls-Spreizcode definiert wird.

13. Sammler von Ereignis-Erfassungsdaten (43), **dadurch gekennzeichnet, dass** er Einrichtungen enthält, um:
- eine Synchronisationsmitteilung zu senden, wobei die Synchronisationsmitteilung einen Keim für eine pseudozufällige Erzeugung mindestens eines Spreizcodes enthält;
- pseudozufällig mindestens einen Spreizcode ausgehend von dem Keim zu erzeugen; und
- eine Ereignis-Signalisierungsmitteilung zu empfangen, deren Modulation von dem mindestens einen Spreizcode definiert wird, wobei die Signalisationsmitteilung Ereignis-Erfassungsdaten enthält.

14. Sensor, der ein Ereignis (202) erfasst, **dadurch gekennzeichnet, dass** er Einrichtungen enthält, um:
- ein Ereignis zu erfassen;
- Ereignis-Erfassungsdaten zu erzeugen;
- eine Synchronisationsmitteilung zu empfangen, wobei die Synchronisationsmitteilung einen Keim für eine pseudozufällige Erzeugung mindestens eines Spreizcodes enthält;
- pseudozufällig mindestens einen Spreizcode ausgehend von dem Keim zu erzeugen; und
- eine Ereignis-Signalisierungsmitteilung zu senden, deren Modulation von dem mindestens einen Spreizcode definiert wird, wobei die Signalisationsmitteilung die Ereignis-Erfassungsdaten enthält.

## Claims

1. Method of communication between at least one event (202) detecting sensor (1.i) and a collector (2) of event detection data (43) transmitted by the sensor in the form of an event signalling message (204), the modulation of which is defined by at least one spreading code, **characterized in that** the method comprises the steps implemented by the sensor:
- on detecting an event, generation of event detection data;
- reception of a synchronization message (201.1-201.4) transmitted by the collector, said synchronization message comprising a seed (32) for a pseudo-random generation of at least one spreading code;
- pseudo-random generation of at least one spreading code from said seed;
- transmission of an event signalling message, the modulation of which is defined by said at least one randomly generated spreading code, the event signalling message comprising the event detection data.

2. Method according to Claim 1, in which the synchronization message is transmitted cyclically, the seed (32) that it comprises being specific to the transmission cycle of the synchronization message, and in which the sensor detects the event in a given cycle and processes the synchronization message of the cycle that follows said given cycle.

3. Method according to Claim 2, in which only a part of the seed is specific to each cycle, the other part of the seed being predefined between the sensor (1.i) and the collector (2).

4. Method according to Claim 1, in which the spreading code is a hopping code and in which the signalling message (204) is transmitted in the form of an ultra wide band signal by time hopping defined by said hopping code.

5. Method according to Claim 2, in which a period corresponding to one cycle of transmission of a synchronization message (201.1-201.4) by the collector (2) is divided into a plurality of time slots, in which the synchronization message of the collector is received in the first time slot of each cycle and in which the signalling message (204) is transmitted in a following time slot.

6. Method according to Claim 5, in which a plurality of spreading codes is generated, said plurality being divided into sequences of spreading codes, each sequence of spreading codes being associated with a time slot from the second time slot onwards, and each message transmitted in a time slot is transmitted with a modulation defined by the sequence of spreading codes associated with said time slot.

7. Method according to Claim 5, in which the event signalling message (204) comprises a synchronization preamble for the synchronization of the sensor and the collector, said synchronization preamble being transmitted with a modulation defined by a single spreading code.

8. Computer program including instructions for the implementation of the method according to Claim 1, when this program is executed by a processor.

9. Method of communication between at least one event (202) detecting sensor (1.i) and a collector (2) of event detection data (43) transmitted by the sensor in the form of an event signalling message (204), the modulation of which is defined by at least one spreading code, **characterized in that** the method comprises the steps implemented by the collector:
- transmission of a synchronization message (201.1-201.4), said synchronization message comprising a seed for a pseudo-random generation of at least one spreading code;
- pseudo-random generation of at least one spreading code from said seed; and
- reception of an event signalling message, the modulation of which is defined by said at least one spreading code, said event signalling message comprising event detection data.

10. Computer program including instructions for the implementation of the method according to Claim 9, when this program is executed by a processor.

11. Communication system comprising at least one event (202) detecting sensor (1.i) and a collector (2) of event detection data (43) transmitted by the sensor in the form of an event signalling message (204), the modulation of which is defined by at least one spreading code, **characterized in that** said collector comprises means for:
- transmission of a synchronization message (201.1-201.4) comprising a seed;
- reception of a signalling message comprising detection data from said sensor;
and **in that** said sensor comprises means for:
- detecting an event;
- generating event detection data;
- receiving a synchronization message from the collector, said synchronization message comprising a seed for a pseudo-random generation of at least one spreading code;
- pseudo-randomly generating at least one spreading code from said seed; and
- transmitting an event signalling message, the modulation of which is defined by said at least one spreading code, the signalling message comprising the event detection data.

12. System according to Claim 11, furthermore comprising a scrambler adapted to transmit signals, the modulation of which is defined by a random spreading code.

13. Collector of event detection data (43), **characterized in that** it comprises means for:
- transmitting a synchronization message, said synchronization message comprising a seed for a pseudo-random generation of at least one spreading code;
- pseudo-randomly generating at least one spreading code from said seed; and
- receiving an event signalling message, the modulation of which is defined by said at least one spreading code, the signalling message comprising event detection data.

14. Event (202) detecting sensor, **characterized in that** it comprises means for:
- detecting an event;
- generating event detection data;
- receiving a synchronization message, said synchronization message comprising a seed for a pseudo-random generation of at least one spreading code;
- pseudo-randomly generating at least one spreading code from said seed; and
- transmitting an event signalling message, the modulation of which is defined by said at least one spreading code, the signalling message comprising the event detection data.
